# EUROPÄISCHE PATENTANMELDUNG

(11) **EP 3 892 407 A1**
(43) Veröffentlichungstag der Anmeldung: **13.10.2021**
(21) Anmeldenummer: 21166638.3
(22) Anmeldetag: 01.04.2021
(51) Int. Cl.: B23C 5/04, B23C 5/06, B23C 5/18, B27G 13/04, B27G 13/08, B27G 13/12

(54) **WERKZEUG ZUR SPANABHEBENDEN BEARBEITUNG NICHT METALLISCHER WERKSTOFFE**

(30) Priorität: 07.04.2020 DE 102020109739
(71) Anmelder: Leitz GmbH & Co. KG, 73447 Oberkochen (DE)
(72) Erfinder: Bauer, Bernhard, 4755 Zell an der Pram (AT); Weinhäupl, Klaus, 4732 Sankt Thomas (AT)
(74) Vertreter: Gramm, Lins & Partner Patent- und Rechtsanwälte PartGmbB

(57) **Zusammenfassung**

Werkzeug zur spanabhebenden Bearbeitung nicht metallischer Werkstoffe mit einem um eine Drehachse (3) antreibbaren Tragkörper (2), einer Mehrzahl im Tragkörper (2) an dessen Außenkontur vorgesehenen ersten Ausnehmungen (6), in die jeweils mindestens eine, aus einer Trägerplatte mit einer stoffschlüssig verbundenen Schicht aus polykristallinem Diamant bestehende Schneidplatte (9) stoffschlüssig eingesetzt ist und denen jeweils in einer Drehrichtung (D) voreilende Spanräume (22) zugeordnet sind, wobei die Spanräume (22) bei einer Drehung des Tragkörpers (2) um die Drehachse (3) von einer Hüllkontur (4) begrenzt werden, die durch die Drehkontur des Tragkörpers (2) definiert wird, und jede erste Ausnehmung (6) mindestens eine Sitzfläche (7) und mindestens eine entgegen der Drehrichtung (D) wirksame Anschlagfläche (8) aufweist, **dadurch gekennzeichnet, dass** die Sitzfläche (7) an der Hüllkontur (4) derart ausgerichtet ist, dass die innere Kante (12) einer Spanfläche (11) der Schneidplatten (9) im Wesentlichen auf der Hüllkontur (4) liegt, vorzugsweise exakt mit der Hüllkontur (4) abschließt.

## Beschreibung

Die Erfindung betrifft ein Werkzeug zur spanabhebenden Bearbeitung nicht metallischer Werkstoffe mit einem um eine Drehachse antreibbaren Tragkörper, einer Mehrzahl im Tragkörper an dessen Außenkontur des Tragkörpers vorgesehenen ersten Ausnehmungen, in die jeweils mindestens eine aus einer Trägerplatte mit einer stoffschlüssig verbundenen Schicht aus polykristallinem Diamant bestehende Schneidplatte stoffschlüssig eingesetzt ist und denen jeweils in einer Drehrichtung voreilende Spanräume zugeordnet sind, wobei die Spanräume von einer Hüllkontur begrenzt werden, die durch die Drehkontur des Tragkörpers definiert ist, und jede erste Ausnehmung mindestens eine Sitzfläche und mindestens eine entgegen der Drehrichtung wirksame Anschlagfläche aufweist.

Unter der Drehkontur wird die Umfangskontur verstanden, die bei der Herstellung des Tragkörpers durch die Dreh-Bearbeitung (Zerspanungsprozess) entsteht.

Ein solches Werkzeug ist beispielsweise aus der EP 3 354 387 A1 bekannt, dessen Tragkörper bezüglich der Drehachse zumindest abschnittsweise als Rotationskörper ausgebildet ist und bei dem in die Oberfläche des Rotationskörpers Aufnahmetaschen eingearbeitet sind, die jeweils eine von der Umfangskontur des Rotationskörpers begrenzte Stützfläche für eine Schneidplatte aufweisen. Die Schneidplatten liegen an den Stützflächen der Aufnahmetaschen an und ragen mit ihrer Schneide aus der Aufnahmetasche radial über die Außenkontur des Rotationskörpers hervor. Die Schneidplatten sind mit den Stützflächen in den Aufnahmetaschen stoffschlüssig verbunden. Da keine radial über die Umfangsfläche hervorstehenden Schneidenträger spanabhebend gebildet werden müssen, ist die Fertigung dieses Spanwerkzeuges vereinfacht.

Aus der WO 2016/142421 A1 ist ein ähnliches Werkzeug bekannt. Bei der Zerspanung von Holz, Holzwerkstoffen und Kunststoffen oder Verbundwerkstoffen kann es zu einer Doppelzerspanung kommen. Dabei trifft ein bereits durch eine Schneide gebildeter Span trotz des vor der Schneide angeordneten Spanraums auf die nachfolgenden Zähne und wird erneut zerspant. Dieser Effekt beschleunigt die Abstumpfung der Werkzeuge und verringert die Spanguterfassung. Um eine Doppelzerspanung möglichst zu vermeiden, ist das bekannte Werkzeug mit ausschließlich radial über den Tragkörper vorstehenden Umfangsschneiden versehen und vor der Schneide ein wannenförmiger Spanraum vorgesehen. Die Schneiden sind tangential in den Tragkörper eingesetzt und stoffschlüssig mit einem einstückig aus dem Tragkörper herausgebildeten Schneidenträger verbunden. Die Fertigung des Werkzeugs ist aufwendig, weil die Schneidenträger durch spanabhebende Bearbeitung des Tragkörpers erzeugt werden müssen, sodass viel Materialabtrag notwendig ist, um die radial hervorstehenden Schneidenträger zu erzeugen.

Die DE 10 2009 005 634 A1 offenbart ein Werkzeug zur spanabhebenden Bearbeitung nicht metallischer Werkstoffe mit einem um eine Drehachse antreibbaren Tragkörper, einer Mehrzahl im Tragkörper an dessen Außenkontur vorgesehenen ersten Ausnehmungen, in die jeweils mindestens eine Schneidplatte eingeschraubt ist. Den Schneidplatten sind jeweils in einer Drehrichtung voreilende Spanräume zugeordnet, wobei die Spanräume von einer Hüllkontur begrenzt werden, die durch die Drehkontur des Tragkörpers definiert ist, und jede erste Ausnehmung mindestens eine Sitzfläche und mindestens eine entgegen der Drehrichtung wirksame Anschlagfläche aufweist.

Aus der EP 3 075 477 A1 ist ein Fräswerkzeug bestehend aus einem Tragkörper und mindestens einem Schneidelement bekannt, bei dem zur Positionierung der Schneidkante relativ zum Boden der Aufnahme eine 3-Punkt-Auflage zwischen Schneidelement und Tragkörper angeordnet ist.

Die DE 20 2015 102 496 U1 offenbart eine Schneidvorrichtung für einen Fräskopf mit einer eine Schneidkante bildenden Schneide auf einem Schneidenträger, der eine Durchtrittsöffnung für eine Befestigungsschraube und einen mit einem Gegenanschlag formschlüssig zusammenwirkenden Richtanschlag aufweist, und die sich dadurch auszeichnet, dass der Richtanschlag in Längsrichtung der Schneidkante parallel zu einer Tangente an die Durchtrittsöffnung verläuft und dass die Durchtrittsöffnung eine Anlauffläche für die Befestigungsschraube zur Verlagerung des Richtanschlags gegen den Gegenanschlag bildet.

Die DE 93 18 728 U1 beschreibt ein Fräswerkzeug mit L-förmig ausgebildeten Schneideinsätzen, die in mindestens zwei L-förmige Aussparungen in den Tragkörper eingesetzt sind.

Hiervon ausgehend, liegt der Erfindung die Aufgabe zugrunde, das eingangs beschriebene Werkzeug so zu verbessern, dass die Fertigung möglichst wirtschaftlich erfolgt und eine bestmögliche Nutzung des Schneidenmaterials über die Lebensdauer des Werkzeuges möglich ist.

Zur Problemlösung zeichnet sich ein gattungsgemäßes Werkzeug dadurch aus, dass die Sitzfläche an der Hüllkontur derart ausgerichtet ist, dass die innere Kante einer Spanfläche der Schneidplatten im Wesentlichen auf der Hüllkontur liegt. Vorzugsweise schließt die innere Kante der Spanfläche exakt mit der Hüllkontur ab. Unter der Drehkontur wird die Umfangskontur verstanden, die bei der Herstellung des Tragkörpers durch die Dreh-Bearbeitung (Zerspanungsprozess) entsteht. Mit dieser Lösung lassen sich sowohl Fräswerkzeuge mit umfangsseitig eingesetzten und/oder mit axial eingesetzten Schneidplatten herstellen.

Durch diese Ausgestaltung können die Schneiden des Werkzeuges solange nachgeschliffen werden, bis sie nahezu vollständig aufgebraucht sind. Es bleibt nur ein geringer Rest an Schneidwerkstoff nach dem letztmöglichen Nachschärfvorgang übrig. Neben der kostengünstigen Herstellung des Tragkörpers wird damit auch ein wirtschaftlicher Betrieb über die Lebensdauer des Werkzeugs erreicht.

Die Hüllkontur begrenzt die Spanräume beispielsweise in radialer Richtung, wenn es sich um einen Fügefräser mit Umfangsschneiden handelt oder in axialer Richtung, wenn es sich um einen Planfräser mit stirnseitigen Schneiden handelt. Handelt es sich bei den Werkzeugen beispielsweise um Fasefräser, kann die Hüllkontur eine Kegelfläche sein und die Spanräume in radialer und axialer Richtung begrenzen.

Erfordert die Arbeitsbreite eines Fräswerkzeugs mehrere nebeneinander angeordnete Schneidplatten, so sind die Spanräume in Axialrichtung vorzugsweise durchgängig in den Tragkörper eingearbeitet. Die Spanräume können aber auch für jede Schneidplatte separat ausgebildet sein. Ebenfalls in Axialrichtung durchgängig sind die ersten Ausnehmungen für die Schneidplatten im Tragkörper eingebracht, und es können bezogen auf die Axialrichtung mehrere Schneidplatten nebeneinander in die ersten Ausnehmungen eingesetzt sein. Die Anordnung der Schneidplatten verläuft vorzugsweise auf einer Linie, die auch spiralförmig über den Umfang verlaufen kann, wobei die Sitzflächen vorzugsweise für jede Schneidplatte separat ausgebildet sind.

Die innere Kante der Spanflächen kann mit einer Toleranz von ± 1,5 mm von der Hüllkontur abweichen, vorteilhafterweise mit einer Toleranz von ± 1,0 mm, von der Hüllkontur abweichen. Wird der obere Grenzwert eingehalten, kann die Schneide vollständig aufgebraucht werden. Wird die untere Toleranz realisiert, verbleibt ein nicht verwertbarer Rest an Schneidplattenmaterial von ca. 2 mm.

Vorzugsweise sind die Schneidplatten an der Sitzfläche stoffschlüssig mit dem Tragkörper verbunden, wobei sich auch zwischen Schneidplatte und Anschlagfläche durch Kapillarwirkung beim Löten zwangsläufig ein Anteil der stoffschlüssigen Verbindung einstellt. Die Verbindungsfläche an der Sitzfläche ist größer als 50 %, insbesondere vorzugsweise größer als 60 %, besonders bevorzugt größer als 70 % der Summe aus stoffschlüssigen Verbindungen an der Sitzfläche und der Anschlagsfläche. Vorteilhaft ist, dass die gesamte Verbindungsfläche bis zum Ende des Werkzeug-Lebenszyklus unverändert bleibt, und die Prozesssicherheit durch Schwächungen der stoffschlüssigen Verbindung nicht beeinträchtigt wird.

Die Sitzfläche und die Anschlagfläche liegen innerhalb der Hüllkontur, wobei die Sitzfläche unter einem Winkel verläuft, der im Wesentlichen dem Freiwinkel der Schneidplatte entspricht und in Drehrichtung in den Spanraum mündet. Im Wesentlichen bedeutet hier, dass der Winkel, in dem die Sitzfläche verläuft, in die gleiche Richtung läuft wie der Freiwinkel der Schneidplatte.

Die zugeschnittenen Schneidplatten sind in ihrem Querschnitt der Kontur der ersten Ausnehmung angepasst und vorzugsweise parallelogrammförmig ausgebildet. Auf diese Weise ergibt sich an der Schneide (Schneidkante) bereits ein erster Freiwinkel, wodurch bei der Fertigbearbeitung der Schneide durch Erodieren oder Schleifen mit einem zweiten Freiwinkel weniger Material abgetragen werden muss und die Bearbeitungszeit dadurch verkürzt wird. Besonders vorteilhaft ist es, wenn der fertige Keilwinkel der Schneide 5° bis 15°, insbesondere 10° ± 2° größer ist als der Keilwinkel der zugeschnittenen Schneidplatte, bzw. wenn der zweite Freiwinkel der fertigen Schneide um eben diesen Betrag kleiner ist als der erste Freiwinkel, weil der Materialabtrag an der Freifläche dann nicht über die gesamte Dicke der Schneidplatte erfolgen muss. Um beispielsweise an der Schneide einen fertigen Keilwinkel von 70° zu erreichen, muss dann bei einem Freiwinkelunterschied von 10° die zugeschnittene Schneidplatte einen Roh-Keilwinkel von 60° aufweisen.

Bei der erfindungsgemäßen Ausgestaltung wird der Schärfaufwand bei der Neuproduktion des Werkzeuges signifikant reduziert. Nur der vordere Schneidenbereich muss geschärft werden, wobei eine ausreichend geringe Oberflächenrauheit erzielt wird, sodass an der Freifläche keine bis wenige Ablagerungen haften bleiben. Der unbearbeitete Bereich der PKD-Schneidplatte im bezogen auf die Drehrichtung hinteren Hartmetallbereich wird eine wesentlich höhere Oberflächenrauheit haben, da dieser Bereich nur Zuschnittqualität hat. Jedoch ist die Schneide in diesem Bereich durch den ersten Freiwinkel gegenüber dem zweiten Freiwinkel zusätzlich freigestellt, wodurch sich die erhöhte Rauheit nicht negativ auswirkt. Im Verlauf des Lebenszyklus werden die Schneiden an der Freifläche vollflächig geschärft, sodass hier die komplette Fläche eine optimale Oberflächenrauheit einnehmen wird.

Um das Schärfen der Schneiden an der Freifläche zu vereinfachen, ist es vorteilhaft, wenn die hierzu eingesetzte Rotationselektrode oder Schleifscheibe, bzw. der Erodierdraht den Tragkörper nicht mit bearbeiten muss. Um dies zu ermöglichen, weist der Tragkörper unmittelbar hinter der Schneide eine zur Sitzfläche im Wesentlichen parallel verlaufende zweite Ausnehmung auf, die innerhalb der Hüllkontur liegt, nach radial außen von der Anschlagfläche begrenzt wird und nach innen hin in je eine muldenförmige Vertiefung mündet.

Durch diese Ausgestaltung wird vermieden, dass der Tragkörper vor dem Nachschärfen hinter den Schneiden in einem separaten Arbeitsgang durch Fräsen oder Schleifen abgesetzt werden muss. In der weiteren Konsequenz kann auch das Nachwuchten des Werkzeugs nach dem Schärfen entfallen.

Die Schneidplatten können durch Löten mit dem Tragkörper verbunden werden. In der Regel wird der Lötbereich induktiv über eine Induktor-Schlange erwärmt. Hierzu sind in Drehrichtung hinter den ersten Ausnehmungen für die Schneidplatten muldenförmige Vertiefungen in dem Tragkörper vorgesehen, in diese Vertiefungen und in die Spanräume vor den ersten Vertiefungen können die Induktor-Schlangen des Lötgenerators gelegt werden. Auf diese Weise wird der Lötbereich von zwei Seiten umschlossen und kann relativ schnell und partiell erwärmt werden. Das Einbringen einer zu hohen Wärmeenergie in den Schneidstoff wird damit vermieden und der Gefahr einer Überhitzung des PKD-Materials vorgebeugt. Dadurch, dass der Wärmeeintrag ausschließlich über den Tragkörper erfolgt, kann die Lötung schnell und für den Schneidstoff schonend durchgeführt werden. Für ein einfaches Handling beim Löten und eine kurze Distanz der Induktor-Schlangen zum Lötbereich ist es besonders vorteilhaft, wenn die muldenförmigen Vertiefungen in Axialrichtung durchgehend verlaufen.

Gleichzeitig liefern die muldenförmigen Vertiefungen bei Verwendung des Werkzeuges den zusätzlichen Effekt, dass Luftverwirbelungen entstehen, die sich hinter der Schneide vom bearbeiteten Werkstück lösende Späne, sogenannte Sekundärspäne, vom Werkzeug wegblasen. Somit wird eine für die Schneiden schädliche Doppel- oder Mehrfachzerspanung vermieden, wodurch sich die Standzeit des Werkzeugs erhöht.

Zusätzlich haben die Vertiefungen den Vorteil, dass sie als Freistellung für die letzten ein bis zwei Nachschärfungen des Werkzeuges dienen können, wodurch vermieden wird, dass die für das Nachschärfen verwendete Rotationselektrode oder Schleifscheibe den Tragkörper berührt und somit der Schärfprozess ungestört und wirtschaftlich durchgeführt werden kann. Außerdem wird durch die Ausnehmungen erreicht, dass das Werkzeug auch mittels Drahterodierens bis zum Ende seiner Lebensdauer geschärft werden kann, da die Vorrichtungen zur Drahtführung ausreichend Platz finden und nicht mit dem Tragkörper kollidieren können.

Mit Hilfe einer Zeichnung sollen Ausführungsbeispiele der Erfindung nachfolgend näher beschrieben werden. Es zeigen:
- Figur 1 -: ein Fräswerkzeug mit Umfangsschneiden in perspektivischer Darstellung;
- Figur 2 -: einen axialen Teilschnitt durch ein Segment eines Fräswerkzeuges nach Figur 1;
- Figur 3 -: eine perspektivische Ansicht eines Segmentes des Tragkörpers ohne Schneidplatte;
- Figur 4 -: einen Radialschnitt durch ein Segment des Tragkörpers;
- Figur 5 -: eine Schneidplatte im Radialschnitt;
- Figur 6 -: eine zu Figur 2 äquivalente Darstellung mit angedeuteten Nachschärfintervallen (Nachschärfen mittels Rotationselektrode oder Schleifscheibe);
- Figur 7 -: eine zu Figur 6 äquivalente Darstellung beim Nachschärfen mittels Drahterodierens;
- Figur 8 -: die Darstellung nach Figur 2 nach dem letztmöglichen Nachschärfvorgang der Schneidplatte;
- Figur 9 -: ein Stirnplanfräswerkzeug in perspektivischer Darstellung;
- Figur 10 -: eine vergrößerte Detaildarstellung aus Figur 9;
- Figuren 11a bis 11e -: verschiedene Ausführungen eines Stirnplanfräsers;
- Figuren 12a bis 12e -: verschiedene Ausführungen des Stirnplanfräsers in der zu Figuren 11a bis 11e analogen dreidimensionalen Darstellung ohne eingesetzte Schneidplatten.

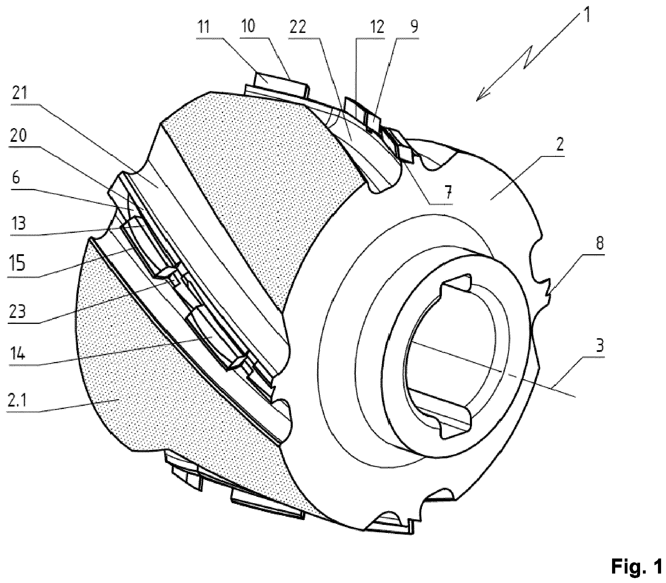

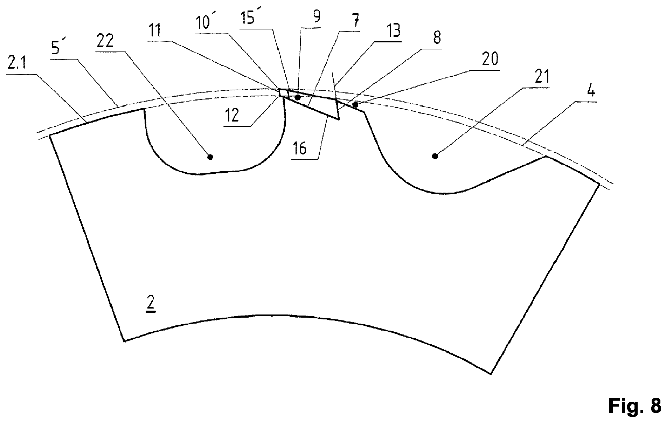

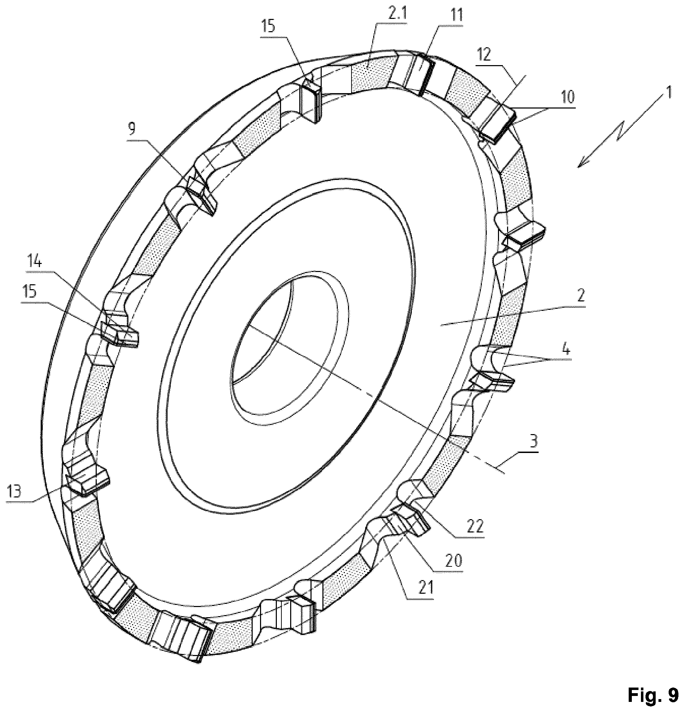

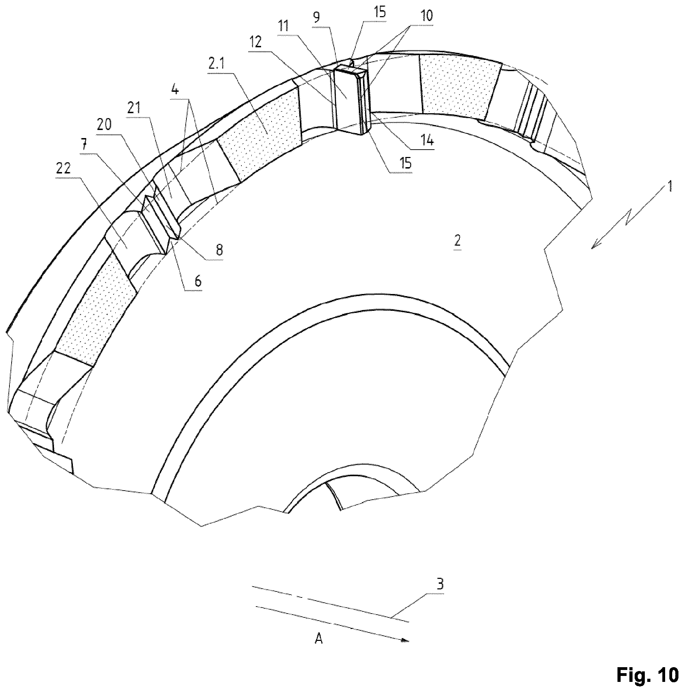

In den Figuren 1 bis 8 wird als erstes Ausführungsbeispiel der Erfindung ein Fräswerkzeug mit Umfangsschneiden dargestellt. In Figuren 9 bis 12 werden Stirnplan- und Fasefräser dargestellt. Soweit übereinstimmende Bauteile bzw. Merkmale vorhanden sind, werden diese der Einfachheit halber mit denselben Bezugszeichen gekennzeichnet.

### 1. Ausführungsbeispiel

Das um eine Drehachse 3 antreibbare Fräswerkzeug 1 besteht aus dem Tragkörper 2 und mehreren darin umfangsseitig in erste Ausnehmungen 6 eingesetzten Schneidplatten 9 mit einer Schneide 10. Die Schneidplatte 9 besteht vorzugsweise aus einer Schicht polykristallinen Diamants (PKD), die jeweils stoffschlüssig mit der Trägerplatte verbunden ist.

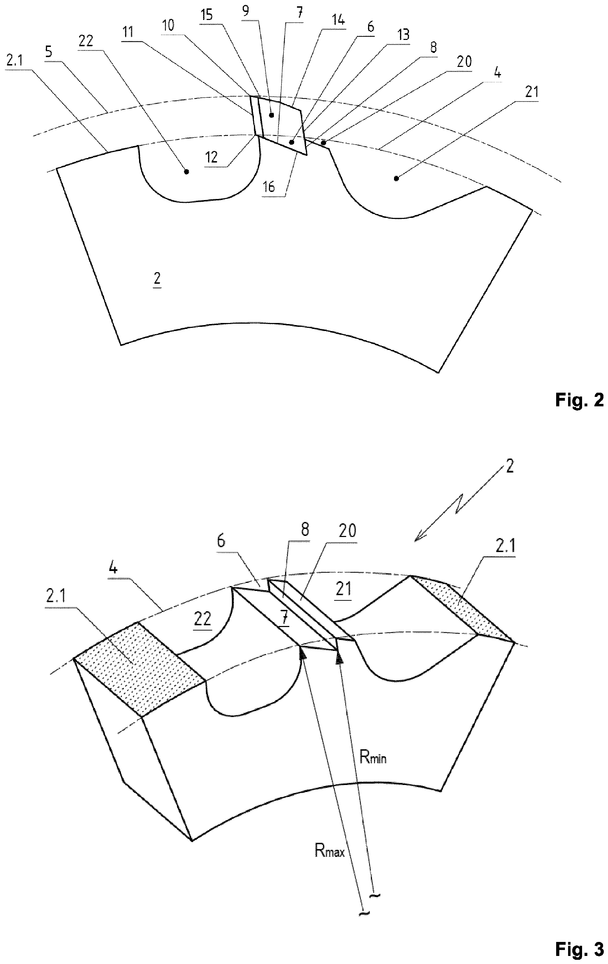

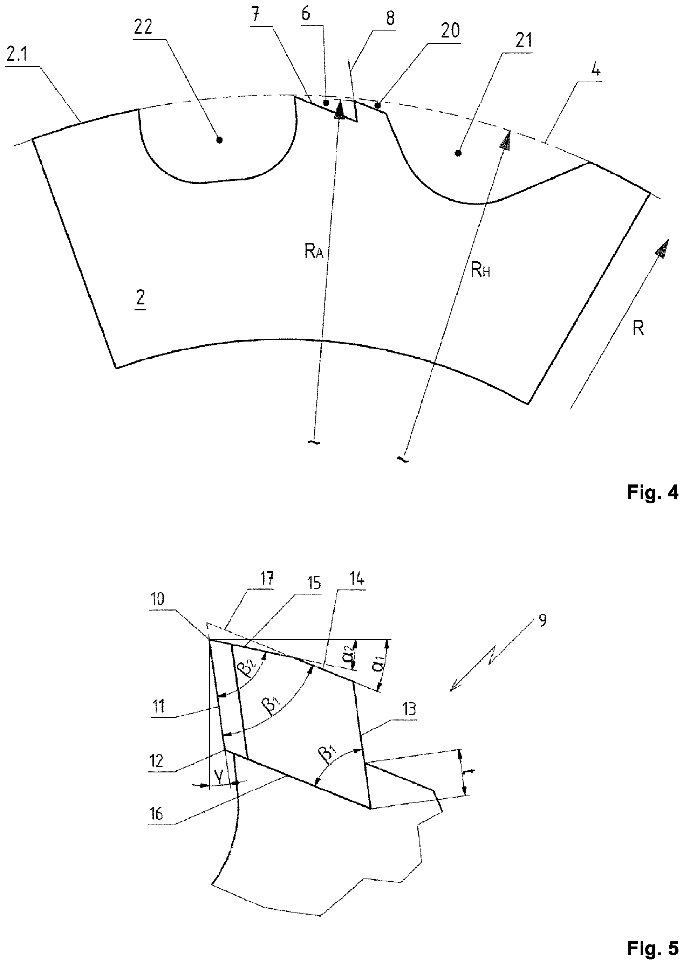

In Drehrichtung D vor der Schneidplatte 9 ist ein Spanraum 22 radial in den Tragkörper 2 eingearbeitet. In Drehrichtung D hinter der Schneidplatte 9 ist eine zweite Ausnehmung 20 und daran anschließend eine Vertiefung 21 in den Tragkörper 2 eingearbeitet. Die Spanräume 22, die die Schneidplatten 9 aufnehmenden ersten Ausnehmungen 6, die sich daran anschließenden zweiten Ausnehmungen 20 und die Vertiefungen 21 verlaufen, wie Figur 1 zeigt, bezogen auf die Axialrichtung A (Drehachse 3) durchgängig im Tragkörper 2. Sie sind also an den Stirnseiten des Fräswerkzeuges 1 offen. Mehrere Schneidplatten 9 sind nebeneinander in die Ausnehmungen 6 eingesetzt. Die Drehkontur 2.1 des Tragkörpers 2 bildet bei der Rotation des Fräswerkzeuges 1 im Bereich der Schneidplatten 9 eine Hüllkontur 4 (Figuren 2, 3). Diese Hüllkontur 4 begrenzt nach radial außen die Spanräume 22 und die Vertiefungen 21. Der Radius R_{H} der Hüllkontur 4 ist größer als der äußere Radius R_{A} der Anschlagflächen 8, sodass die Anschlagflächen 8 in radialer Richtung R innerhalb der Hüllkontur 4 liegen. Wie Figur 4 zeigt, münden durch diese Ausgestaltung die Anschlagflächen 8 in die zweiten Ausnehmungen 20, die wiederum in die Vertiefungen 21 auslaufen.

Die Schneide 10 an jeder Schneidplatte 9 weist eine in Drehrichtung D hervorstehende Spanfläche 11 auf.

Wie Figur 3 zeigt, ist die Sitzfläche 7 der ersten Ausnehmung 6 entgegen der Drehrichtung D nach radial innen geneigt, indem der größte Radius Rₘₐₓ im Bereich des Spanraumes 22 und der kleinste Radius Rₘᵢₙ im Bereich der im Tragkörper 2 ausgebildeten Anschlagfläche 8 vorgesehen ist. Die im Querschnitt im Wesentlichen parallelogrammförmig ausgebildete Schneidplatte 9 ist mit ihrer Unterseite 16 mit der Sitzfläche 7 durch Hartlöten stoffschlüssig verbunden. Die axiale Positionierung der Schneidplatten 9 erfolgt über die Positioniernuten 23 (Fig. 1). An der Anschlagfläche 8 liegt die Schneidplatte 9 an, und es bildet sich dort durch Kapillarwirkung zwangsläufig ein kleiner Anteil an der gesamten stoffschlüssigen Verbindung. Die radial innere Kante 12 der Spanfläche 11 der Schneide schließt mit der Hüllkontur 4 ab, wie Figur 2 zeigt. Bezogen auf die Gesamtfläche, die sich aus der Summe der Sitzfläche 7 und der Anschlagfläche 8 ergibt, ist die Fläche der stoffschlüssigen Verbindung an der Sitzfläche 7 größer als 50 %, insbesondere größer als 60 %.

Radial außen an der Spanfläche 11 ist die Schneidkante 10 ausgebildet, die den Flugkreisdurchmesser 5 bestimmt. Polykristalline Diamantschneidplatten sind in der Regel als Sandwich-Struktur aufgebaut, wobei eine ca. 0,5 ± 0,2 mm dicke Schicht aus polykristallinem Diamant auf eine dickere Trägerplatte aus Hartmetall aufgebracht ist. Über die Hartmetallschicht wird die Schneidplatte 9 mit dem aus Stahl bestehenden Tragkörper 2 verbunden. Die Schneidplatten 9 werden aus gepressten Ronden, die in verschiedenen Dicken produziert werden, entweder mittels Drahterodierens oder per Schneidlaser zugeschnitten. Die Zuschnitte können kundenspezifisch je nach Anforderung in verschiedenen Größen und Formen hergestellt werden. Wie Figur 5 zeigt, ist die Schneidplatte 9 in einer solchen Form geschnitten, dass der äußere radiale Freiwinkelbereich bereits fertiggestellt ist und der Schärfprozess wirtschaftlich durchgeführt werden kann. Der Zuschnitt der Schneidplatte 9 erfolgt so, dass möglichst wenig Schneidstoff verschwendet wird und die beiden gegenüberliegenden Schnittflächen parallel sind. Das heißt, der radiale Freiwinkel und der radiale Plattensitz sind schräg geschnitten. So entsteht zwischen radialer Freifläche 14 und der Spanfläche 11 der Schneidplatte 9 ein spitzer Winkel und zwischen der Unterseite 16 der Schneidplatte 9 und der Spanfläche 11 ein stumpfer Winkel. Dies hat den Vorteil, dass nicht die gesamte Plattendicke der Schneidplatte 9 beim Schärfprozess in der Werkzeugherstellung bearbeitet werden muss, sondern nur der vordere qualitätsrelevante Schneidenbereich.

Figur 5 zeigt, dass die zugeschnittenen Schneidplatten 9 parallelogrammförmig ausgebildet sind. Hierdurch ergibt sich an der Schneidkante 10 bereits ein erster Freiwinkel α₁. Wird die Rohfläche 17 bei der Fertigbearbeitung der Schneide 10 entfernt, wird der zweite Freiwinkel α₂ erzeugt, der kleiner ist als der erste Freiwinkel α₁. Die Bearbeitungszeit wird verkürzt, weil der Materialabtrag zur Erzeugung der Freifläche 15 nicht über die gesamte Dicke der Schneidplatte 9 erfolgen muss. Um beispielsweise an der Schneide 10 einen fertigen Keilwinkel β₂ von 70° zu erreichen, muss bei einem Freiwinkelunterschied von 10° die zugeschnittene Schneidplatte einen Roh-Keilwinkel β₁ von 60° aufweisen.

Erkennbar ist, dass der fertige Keilwinkel β₂ der Schneidplatte 9 größer ist als der Roh-Keilwinkel β₁ der Schneidplatte 9.

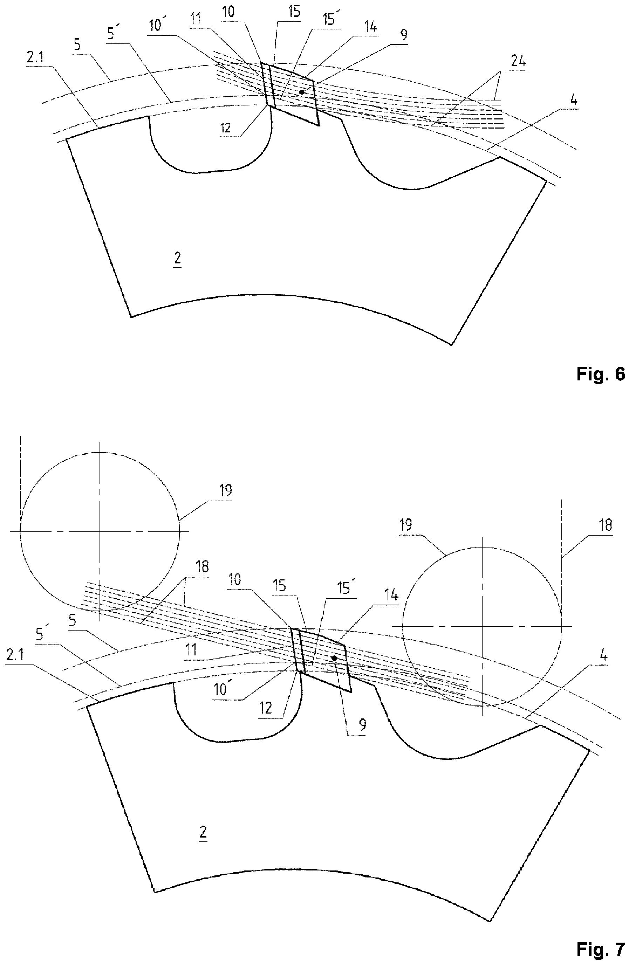

Figur 6 zeigt verschiedene Zustände an der Schneidplatte 9, wenn diese mittels Rotationselektrode oder Schleifscheibe 24 nachgeschärft wird. Es ist erkennbar, dass sich die Fläche der stoffschlüssigen Verbindung zwischen der Schneidplatte 9 und der Sitzfläche 7 auch nach allen Schärfvorgängen nicht ändert. Die Sicherheit der Lötverbindung steigt damit mit jeder Schärfung, weil die Masse der Schneidplatte 9 abnimmt und sich die radiale Höhe der Schneidplatte 9 und damit der Belastungshebel verringert, was sich auf die stoffschlüssige Verbindung vorteilhaft auswirkt. In Figur 6 ist mit dem Bezugszeichen 10' die Schneidkante nach der letzten möglichen Nachschärfung gekennzeichnet. Der Flugkreisdurchmesser reduziert sich damit von dem im Neuzustand mit 5 bezeichneten Radius auf den mit 5' gekennzeichneten kleineren Radius.

Zur Sicherstellung der vollwertigen Nutzung muss die Schneidplatte 9 zur Hüllkontur 4 des Tragkörpers 2 richtig positioniert sein. Die Schnittlinie zwischen der Spanfläche 11 und der radial nach innen gerichteten Unterseite 16 der Schneidplatte 9 liegt im Bereich der Drehkontur 2.1 bzw. der Hüllkontur 4 in einem Toleranzbereich von + 1,5 mm bis - 1,5 mm. Da sich durch einen Achswinkel der Schneiden 10 an den Fräswerkzeugen 1 gewisse Verzerrungen ergeben und die Ausnehmungen 6 für die Sitze der Schneidplatten 9 schräg zur Achsrichtung in den Tragkörper 2 eingefräst werden müssen, ergibt sich in jeder axialen Position der Schneide 10 eine unterschiedliche Situation, weswegen der Messpunkt für die Lagepositionierung zwischen Spanflächenunterkante 12 und der Hüllkontur 4 des Tragkörpers 2 in der axialen Mitte der Schneidplatte 9 zu sehen ist. Die Positionierung bzw. die Bestimmung der Winkellage der Schneidplatten 9 am Umfang des Tragkörpers 2 erfolgt mittels des bezogen auf die Drehrichtung D hinteren Anschlags, der als kleine radial nach außen laufende Fläche ausgeführt ist. Die sich dadurch einstellende Anschlagfläche 8 verläuft unter dem Roh-Keilwinkel (β₁) zur Sitzfläche 7 nach radial außen mit der Aussparung 20 zusammen, die innerhalb der Hüllkontur 4 des Tragkörpers 2 angeordnet ist und parallel zur Sitzfläche 7 verläuft. Die Tiefe t der Anschlagfläche 8 nach radial innen ergibt sich als Funktion zwischen der Dicke der Schneidplatte 9, dem Spanwinkel γ der Schneide 10, dem Roh-Keilwinkel β₁ der Schneidplatte, der Lage der Spanfläche 11 zum Austritt des Spanraumes 22 und der Lage der Spanflächenunterkante 12 der Schneidplatte 9 zur Drehkontur 2.1 des Tragkörpers 2 und liegt vorzugsweise zwischen 0,2 und 2,7 mm. Als vorteilhafte Ausführungen haben sich 0,9 bis 1,5 mm Tiefe gezeigt.

Ausschlaggebend für eine gute Lötverbindung ist unter anderem eine ausreichend große Lötfläche zwischen Schneidplatte 9 und dem Tragkörper 2, was durch die Verwendung von Schneidplatten 9 mit einer Dicke von 3,18 mm sichergestellt wird, wobei je nach Ausgestaltung aber auch dickere oder dünnere Schneidplatten 9 gewählt werden können. Ein Vorteil dieser Ausführung ist die Anwendung des sogenannten Schrägschnittes, der bei einem Roh-Keilwinkel β₁ von 60° die Lötfläche im Vergleich zu einem rechtwinkligen Zuschnitt um ca. 15% erhöht, was bei gängigen Abscherfestigkeiten von Hartlötverbindungen zu einer guten und sicheren Lötverbindung führt.

Um die gewünschte Hartlötung mittels Induktionsverfahrens durchführen zu können, muss der Tragkörper 1 mittels Induktorschlangen erhitzt werden, wobei es vorteilhaft ist, wenn der Stahlkörper im Bereich der Lötverbindung von zwei gegenüberliegenden Seiten umschlossen wird. Ein Einbringen eines zu großen Anteils an Wärmeenergie in den Schneidstoff birgt die Gefahr einer Überhitzung und reduziert die Lebensdauer der Schneide10. Hierzu ist vorgesehen, in Drehrichtung D hinter der Schneidplatte 9 eine Vertiefung 21 einzubringen, die zusammen mit dem in Drehrichtung D vor der Schneidplatte 9 angeordneten Spanraum 22 Platz für die Aufnahme von Induktorschlangen bietet.

Wie in Figur 7 zu sehen ist, bieten die Vertiefungen 21 den weiteren Vorteil, dass beim Nachschärfen mittels Drahterodierens, die Vorrichtungen 19 zur Drahtführung ausreichend Platz finden und nicht mit dem Tragkörper 2 kollidieren können.

### 2. Ausführungsbeispiel

Bei dem in Figur 9 perspektivisch dargestellten Fräswerkzeug 1 handelt es sich um einen Stirnplanfräser mit in axialer Richtung A wirksamen Schneidkanten 10. Die Schneidplatten 9 sind in erste Ausnehmungen 6 eingesetzt, die in axialer Richtung A in den Tragkörper 2 eingearbeitet sind. Die Anschlagflächen 8, an denen sich die Schneidplatten 9 abstützen, sind auch hier entgegen der Drehrichtung D wirksam. Die Sitzflächen 7, auf denen die Schneidplatten 9 befestigt werden, sind analog zu den Sitzflächen 7 für den Fügefräser (Ausführungsbeispiel 1) ausgebildet. Die Hüllkontur 4 überdeckt die Spanräume 22 in axialer Richtung A und wird gebildet durch den axial am weitesten hervorstehenden Punkt durch jeden Axialschnitt durch den Tragkörper 2. Auch hier sind den Sitzflächen 7 in Drehrichtung D zweite Ausnehmungen 20 nachgeordnet und an diese schließen sich dann Vertiefungen 21 an.

### Weitere Ausführungsbeispiele

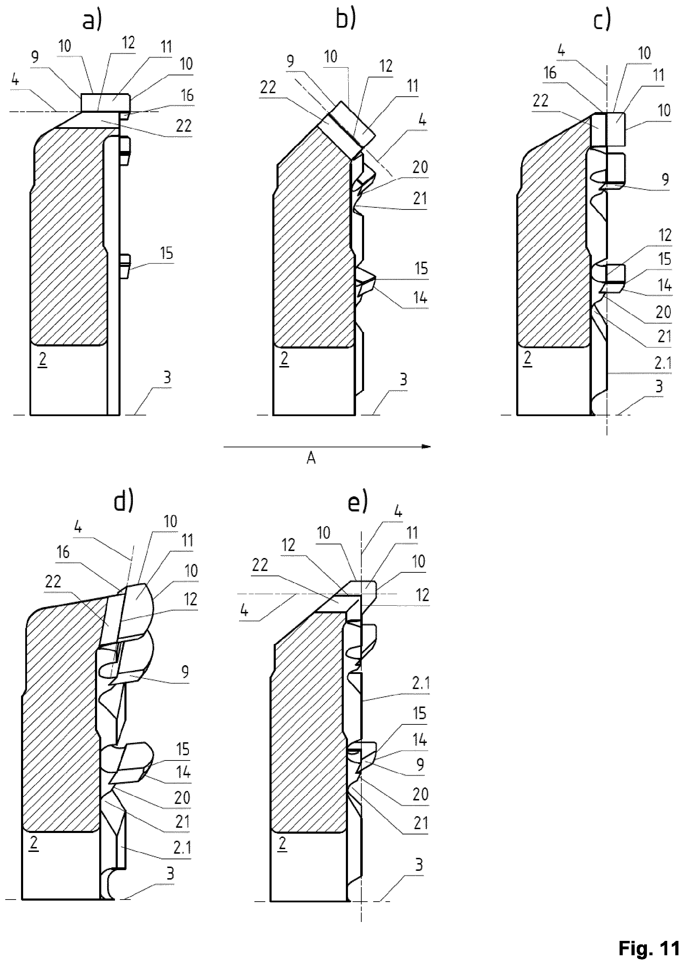

Wie Figuren 11a bis 11e zeigen, können die Schneidkanten 10 und die dazugehörigen Unterseiten 16 der Schneidplatten in unterschiedlichen Winkeln zur Drehachse 3 im Tragkörper 2 angeordnet sein. Die Hüllkonturen 4 verlaufen ebenfalls in einem entsprechenden Winkel. Die Hüllkonturen 4 bei den Werkzeugen nach Figur 11a oder Figur 11e verlaufen parallel, also unter 0°, zur Drehachse 3 und beschreiben eine Zylinderfläche. Die Hüllkontur 4 kann prinzipiell unter jedem beliebigen Winkel zur Drehachse 3 verlaufen. Die Hüllkonturen 4 bei den Werkzeugen nach Figur 11c oder 11e werden definiert durch die axial äußeren Punkte des Tragkörpers 2 und beschreiben eine Ebene senkrecht, also 90°, zur Drehachse 3. Das Ausführungsbeispiel nach Fig. 11e zeigt, dass sich die Hüllkontur 4 eines gattungsgemäßen Werkzeugs auch aus verschiedenen einzelnen Hüllkonturen 4 und entsprechend positionierten Schneidplatten 9 mit Schneidkanten 10 und Unterseiten 16 der Schneidplatten 9 zusammensetzen kann. Die Hüllkontur 4 bei dem Werkzeug nach Figur 11b verläuft wie die Schneidplatte 9 in einem Winkel von etwa 45° zur Drehachse 3 und beschreibt eine nach außen gerichtete Kegelfläche. Die Anordnung der Schneidplatte 9 in dem in Figur 11d gezeigten Ausführungsbeispiel entspricht der Ausführungsform nach Figur 11b, wobei der Plattensitz über die axiale Lage hinaus weiter nach radial innen geschwenkt ist und die Hüllkontur 4 entsprechend "mitgedreht" wurde, sodass sie eine nach innen gerichtete Kegelfläche beschreibt.

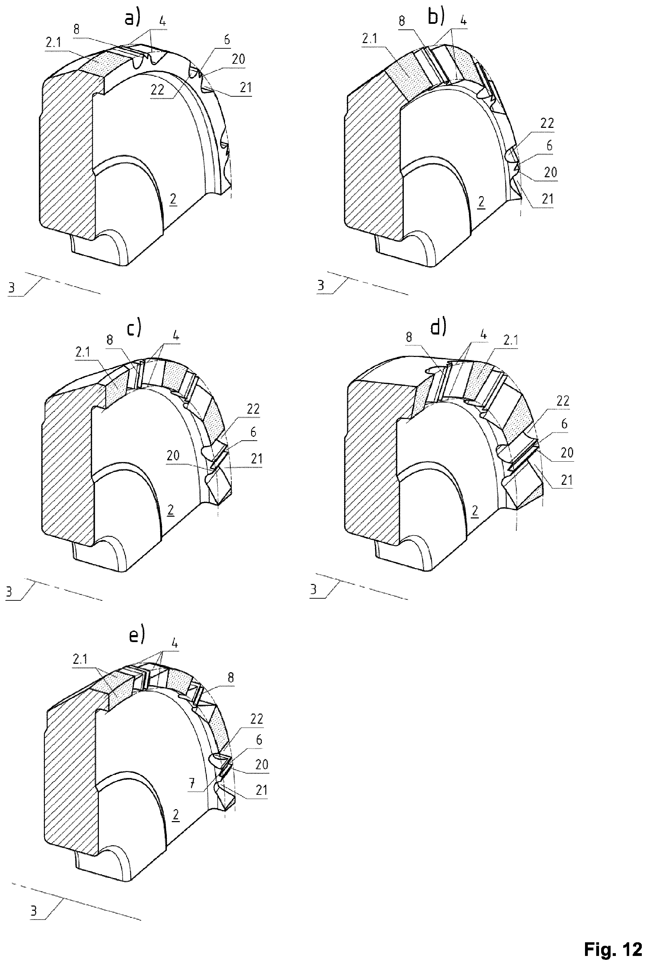

Die Figuren 12a bis 12e zeigen in dreidimensionaler Ausschnittsdarstellung den Tragkörper 2 verschiedener Stirnplanfräser (Figuren 11a bis 11e) ohne in die ersten Ausnehmungen 6 eingesetzte Schneidplatten, sodass die Hüllkurve 4 des Tragkörpers 2 und die in Bezug auf die Ausgestaltung der ersten und zweiten Ausnehmungen relevanten Drehkonturen 2.1 des Tragkörpers 2 erkennbar werden.

### Bezugszeichenliste

- 1: Fräswerkzeug
- 2: Tragkörper
- 2.1: Drehkontur
- 3: Drehachse
- 4: Hüllkontur
- 5: Flugkreisdurchmesser (Neuzustand)
- 5': Flugkreisdurchmesser (komplett nachgeschärft)
- 6: Ausnehmung
- 7: Sitzfläche
- 8: Anschlagfläche
- 9: Schneidplatte
- 10: Schneidkante (Neuzustand)
- 10': Schneidkante (komplett nachgeschärft)
- 11: Spanfläche
- 12: Spanflächenunterkante
- 13: Fläche
- 14: erste Freifläche (neu)
- 15: zweite Freifläche (neu)
- 15': zweite Freifläche (komplett nachgeschärft)
- 16: Unterseite
- 17: Rohfläche
- 18: Erodierdraht
- 19: Vorrichtung zur Drahtführung
- 20: Ausnehmung
- 21: Vertiefung
- 22: Spanraum
- 23: Axiale Positioniernut
- 24: Rotationselektrode oder Schleifscheibe
- A: Axialrichtung
- R: Radialrichtung
- R_{A}: Radius
- R_{H}: Radius
- Rₘₐₓ: Radius
- Rₘᵢₙ: Radius
- t: Tiefe
- α₁: erster Freiwinkel
- α₂: zweiter Freiwinkel
- β₁: erster Keilwinkel (Roh-Keilwinkel)
- β₂: zweiter Keilwinkel
- γ: Spanwinkel

## Patentansprüche

1. Werkzeug zur spanabhebenden Bearbeitung nicht metallischer Werkstoffe mit einem um eine Drehachse (3) antreibbaren Tragkörper (2), einer Mehrzahl im Tragkörper (2) an dessen Außenkontur vorgesehenen ersten Ausnehmungen (6), in die jeweils mindestens eine, aus einer Trägerplatte mit einer stoffschlüssig verbundenen Schicht aus polykristallinem Diamant bestehende Schneidplatte (9) stoffschlüssig eingesetzt ist und denen jeweils in einer Drehrichtung (D) voreilende Spanräume (22) zugeordnet sind, wobei die Spanräume (22) bei einer Drehung des Tragkörpers (2) um die Drehachse (3) von einer Hüllkontur (4) begrenzt werden, die durch die Drehkontur (2.1) des Tragkörpers (2) definiert wird, und jede erste Ausnehmung (6) mindestens eine Sitzfläche (7) und mindestens eine entgegen der Drehrichtung (D) wirksame Anschlagfläche (8) aufweist, **dadurch gekennzeichnet, dass** die Sitzfläche (7) an der Hüllkontur (4) derart ausgerichtet ist, dass die innere Kante (12) einer Spanfläche (11) der Schneidplatten (9) im Wesentlichen auf der Hüllkontur (4) liegt, vorzugsweise exakt mit der Hüllkontur (4) abschließt.

2. Werkzeug nach Anspruch 1, **dadurch gekennzeichnet, dass** die Hüllkontur (4) die Spanräume (22) in radialer Richtung (R) begrenzt.

3. Werkzeug nach Anspruch 1, **dadurch gekennzeichnet, dass** die Hüllkontur (4) die Spanräume (22) in axialer Richtung (A) begrenzt.

4. Werkzeug nach einem der vorstehenden Ansprüche, **dadurch gekennzeichnet, dass** die innere Kante (12) der Spanfläche (11) mit einer Toleranz von ± 1,5 mm von der Lage der Hüllkontur (4) abweicht.

5. Werkzeug nach einem der vorstehenden Ansprüche, **dadurch gekennzeichnet, dass** die Schneidplatten (9) an der Sitzfläche (7) stoffschlüssig mit dem Tragkörper (2) so verbunden sind, dass die Verbindungsfläche mehr als 50 % vorzugsweise mehr als 60 % der Summe von der Sitzfläche (7) und Anschlagfläche (8) beträgt.

6. Werkzeug nach Anspruch 2 oder 3, **dadurch gekennzeichnet, dass** die Anschlagflächen (8) innerhalb der Hüllkontur (4) liegen.

7. Werkzeug nach einem der vorstehenden Ansprüche, **dadurch gekennzeichnet, dass** der Winkel (β₁) zwischen der Sitzfläche (7) und der Anschlagfläche (8) kleiner ist als der Keilwinkel (β₂) der Schneidplatte (9).

8. Werkzeug nach Anspruch 7, **dadurch gekennzeichnet, dass** der Keilwinkel (β₂) zwischen 5° bis 15°, vorzugsweise 10° größer ist als der Winkel (β₁).

9. Werkzeug nach einem der vorstehenden Ansprüche, **dadurch gekennzeichnet, dass** bezogen auf die Drehrichtung (D) hinter den Anschlagflächen (8) Vertiefungen (21) in den Tragkörper (2) eingebracht sind.

10. Werkzeug nach einem der vorstehenden Ansprüche, **dadurch gekennzeichnet, dass** zur Ausbildung einer Schneide (10) jede Schneidplatte (9) mit einer Schicht aus polykristallinem Diamanten versehen ist.

11. Werkzeug nach einem der Ansprüche 1, 2 oder 4 bis 10, **dadurch gekennzeichnet, dass** bezogen auf die Drehachse (3) der größte Radius Rₘₐₓ der Sitzfläche (7) im Bereich des Spanraums (22) und der kleinste Radius Rₘᵢₙ im Bereich der Anschlagfläche (8) vorliegt.

12. Werkzeug nach einem der vorstehenden Ansprüche, **dadurch gekennzeichnet, dass** die Sitzfläche (7) in den Spanraum (22) mündet.

13. Werkzeug nach einem der vorstehenden Ansprüche, **dadurch gekennzeichnet, dass** bezogen auf die Drehrichtung (D) unmittelbar hinter den Anschlagflächen (8) zweite, im Wesentlichen parallel zu den Sitzflächen (7) verlaufende Ausnehmungen (20) in dem Tragkörper (2) vorgesehen sind, in die die Anschlagflächen (8) münden.
